# EUROPEAN PATENT APPLICATION

(11) **EP 4 722 652 A2**
(43) Date of publication of application: **08.04.2026**
(21) Application number: 25206564.4
(22) Date of filing: 03.10.2025
(51) Int. Cl.: G01C 21/20, G01C 21/30, G05D 1/00, G06T 7/73, G06V 20/56

(54) **METHOD AND DEVICE FOR VEHICLE AND PERSON POSITIONING**

(30) Priority: 04.10.2024 CH 11012024
(71) Applicant: Startchik, Sergei, 1201 Genève (CH)
(72) Inventor: Startchik, Sergei, 1201 Genève (CH)
(74) Representative: Micheli & Cie SA

(57) **Abstract**

Current invention corresponds to a method and device for precise positioning of vehicles driving on a road, flying vehicles and walking persons. Positioning uses information from road and walls surface seen at resolution of around 1mm/pix - resolution that reveals unique appearance of the surface and allows to locate the vehicle with respect to that unique location information.

Second aspect of the invention is a special camera that would allow taking pictures of that structure that are of sufficient resolution to access to details of the surface, images that are sharp and special light that reveals the structure if needed.

## Description

### Field of the invention

Self-driving cars, personal vehicles, drones or persons need a precise positioning on a street. Satellites and visual information do not deliver sufficient precision in certain situations like underground parkings, dense urban areas, electromagnetic interference areas and remote areas. Same applies to drones where GPS signal could be unavailable for short time and where urban area does not present enough visual features for visual positioning.

The present invention relates to a method of reading unique structure of road and wall surface for cars, drones and persons. The present invention also suggests a camera device that facilitate sharp and continuous image taking in any conditions.

### Background of the invention

Positioning of self-driving cars and drones relies on GPS, lidars, cameras, sound, g-sensors, accelerometers, some other sensors and information about previous trajectory. They perform well in clear weather, not-so-dense traffic and at reasonable speeds. However, any interruption of one or several sensor input, especially at high speed, leaves on-board computer without precious information for too long time and could lead to wrong behavior. Adding another source of uninterruptible and reliable positioning information would help at high speeds.

Using surface of a road that is random but deterministic is an excellent source of information that is not dependent on external information sources like satellites or markers, always within reach, redundant, can be read at several surface points and in any weather. Several works have come close to this application. US2022281456A1 works with lidar to read "road fingerprint" to adapt active suspension, US2022196849A1 does read road surface with a camera and stores that information.

Recognizing road patches from continuous road surface image would provide unique and redundant positioning. Size of needed patch will depend on each road properties. A database of road surface coupled with precise map would be built and can be stored on a car or downloaded for a certain neighborhood in which a car is known to be present.

Similar approach can be applied to drones which, today, fly in warehouses and rely on wall emitters or markers, lidar and visual positioning. Cost of accidents is low as warehouses are mainly unmanned. When drones will fly in cities to deliver parcels, speed vs. security compromise will become more acute and precise positioning will become a millisecond question.

Centimeter-precision positioning with lidar and cameras can provide important input recognizing the environment, but those inputs are less reliable in not so good weather and do not provide guaranteed position in very repetitive environments like high building with same windows.

Positioning that would use structure of concrete or paint on building walls or ceiling paint could provide a centimeter or millimeter precision for drone positioning. Such positioning depends on several technology aspects: sharp images with no blur from motion and depth, very fast and continuous image taking, high resolution to catch millimeter details, very fast identification of surface patch in a database, very compact database so that low-end hardware can use it. Existing methods and devices lack all those aspects.

Cameras taking sharp images in high-speed motion mainly rely on short exposure time with complex electronics, optical image stabilization (OSI) that moves the lens or sensor, gyro stabilization of whole camera, or short strobe light pulse. Any of those approaches exhibit limitations. Short exposure time need very strong light which could be energy-consuming. Cost of short exposure sensors is high as well. OIS has a limited range of compensation within a dozen of degrees and can't be continuous, short light pulse would work in relative darkness only. Some approaches provide continuous compensation of motion in only one direction US10855889B2, EP2832087B1.

Drones yaw/pitch/tilt motion could be very strong due to wind and only partially addressed by gyro stabilization of on-board camera which, in this case, points in only one viewing direction. When camera has to switch to another direction, blur is unavoidable and visual positioning information is lost during the switch. For example, a drone flying above an empty road at 10m altitude can have precise location information only if continuous, uninterrupted image of road surface is taken.

Currently, algorithms compensating blur in images can only deal with limited blur and require significant computational power for on-board processing. Avoiding complex processing and image storage during drone motion would allow shorter decision time and lower power consumption. Applications beside positioning (like registration, image stitching or urban area mapping) require a lot of redundant images to be taken and stored during flight and registered on the fly requiring computational cost or offline requiring a lot of transmission. Another concern of such applications is taking images of terrain with strongly varying depth but with a sensor that has a limited depth of field thus dealing with strong depth blur.

### Brief description

Current invention includes two elements for positioning of a vehicle, drone or person. First element is a method based on appearance of surface structure of road, wall, ceiling or other objects (cars can also use walls for positioning in case of snow and visually impaired person can use ceiling surface in a hospital for example). The method based on structure would use specially designed algorithm and data representation to provide positioning reliably and work on low resources (power, memory, CPU) hardware.

Second element is a device which is a new type of camera that would provide images of surface structure at high speeds that have few major properties. Such images would be very sharp in any motion conditions giving 1mm/pix resolution required to analyze the surface structure. Such images would be continuous and not requiring stitching. Third, motion in z direction (depth) would not produce blur. Fourth, surface structure would be revealed in a very precise manner and not dependent on ambient light.

These objectives and other advantages are achieved with a camera design where sensor is a spherical element that can freely rotate in any direction. This free rotation can adapt to the motion of the vehicle or person with respect to surfaces and provide continuous image of the surface. Depth variations (like buildings) are handled by objective design.

### Brief description of the Figures

| | |
|---|---|
| Figure 1: Application of precise positioning | 1 |
| Figure 2: Algorithm for precise positioning | 1 |
| Figure 3: Specifications of positioning for vehicles | 1 |
| Figure 4: Specifications of positioning for drones | 1 |
| Figure 5: Sensor transparency aspects | 2 |
| Figure 6: Sensor transparency alternatives | 3 |
| Figure 7: Lens design and light configuration for vehicles | 4 |
| Figure 8: Lens design and light configuration for drones | 5 |
| Figure 9: Sphere tessellation with pixels and other elements (triangular) | 6 |
| Figure 10: Sphere tessellation with pixels and other elements (hexagonal, circular) | 7 |
| Figure 11: Magnetic suspension and activation of sensor (passive) | 8 |
| Figure 12: Magnetic suspension and activation of sensor (active) | 9 |
| Figure 13: Registration algorithm part 1.a | 10 |
| Figure 14: Registration algorithm (part 1.b) | 11 |
| Figure 15: Registration algorithm (part 2.a) | 12 |
| Figure 16: Registration algorithm (part 2.b) | 13 |
| Figure 17: Algorithm de registration (IA) | 14 |

### Disclosure of preferred embodiments

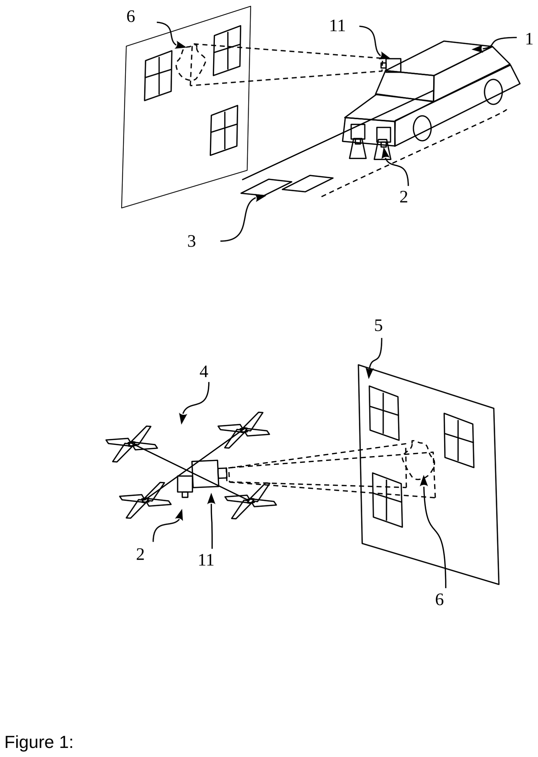

Targeted application is outlined on *Figure 1* where a *Car 1* moves on a road and has one or several *Road looking cameras 2* that view the road surface and acquire *Viewed road surface patch 3* and one or several *Wall-looking camera* 11 viewing side objects like walls and acquire *Viewed wall surface patch 6* at high resolution. Similarly, a *Drone 4* is viewing a *Wall 5* with *Wall-looking camera 11* acquiring images of *Viewed wall surface patch 6* and road with *Road looking cameras 2.* A walking visually impaired person can be equipped with similar cameras that can point to corridor ceiling in a hospital for location.

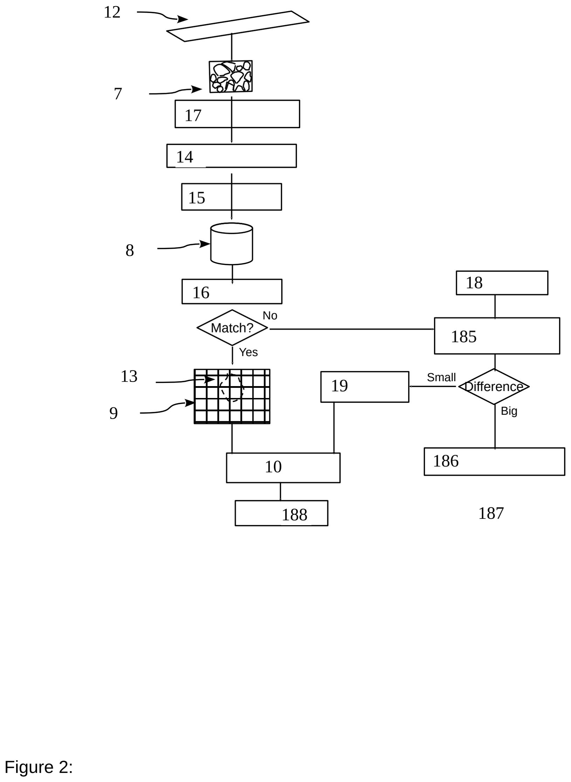

General process of positioning is present on lower part of the *Figure 2**.* Camera acquires *Continuous image of surface 12*, an *Image of surface patch 7* is taken from continuous image and its *Surface patch representation 14* is extracted with *Feature extraction algorithm 17*. That representation is used in *Indexing step 15* to perform a fixed-time search against *Database of road surface 8*. When similar patches are found in the database, information from them is combined with *Mapping algorithm 16*, reconciling patches with positioning and directional coordinates and *Surface location on map 13* are aligned to geographical map *Map with coordinates 9* providing mm-precision location as outcome and *X, Y,Z coordinates 10* input to *Autonomous navigation 188* navigation algorithm. In case of AI version, the steps 17,15 and 16 are performed by one pipeline architecture.

When performing positioning, system is permanently used to update the information in a database to account for road wear-off and appearing defects. If at the stage of reconciling patches during *Mapping algorithm 16* surface patches do not match well with the database and between them, the following occurs. The difference is stored in local database and map in step *Store patches in local DB and map 185* and marked for upload on next occasion to common on-line database and map. *Input of GPS coordinates 18* is stored with patches. Recorded state of the surface stored locally is used so that given car can navigate again this part of the road. A particular *Sparse mapping of patches to map 19* is performed with presence of occluding objects like leaves, water or dust, and continues autonomous navigation. If differences are important and seem to come from permanent road appearance change, updates are marked for urgent upload in step *Store patches for upload 186* to inform other vehicles and system is switched for manual driving *Manual driving 187.*

Now for any algorithm *Feature extraction algorithm 17* above to work, following conditions should be met. First, image should be of sufficient resolution to capture details of the surface. For asphalt road features, floors, walls, tree trunks and ceilings, the rough scale of resolution is 10-0.1 mm/pix. For simplicity let's assume without loss of generality that we target 1mm/pix as average resolution. Second condition is that blur should not exceed the resolution in the first condition, otherwise blur of even 5-10 pixels (corresponding to 5-10mm) would make 1 pixel features not usable and not visible in the image. Third, surface features under unknown and direct illumination, appear as shadows and only part of them is visible depending on illumination orientation. So, each illumination orientation reveals only a limited part of features eventually not sufficient to provide precise positioning and remaining big part of features is just not visible. Car lights or daylight are probably not always sufficient for illumination of the surface. Device presented in our invention solves those three problems of resolution, of blur and of light (if needed).

### Application specifications

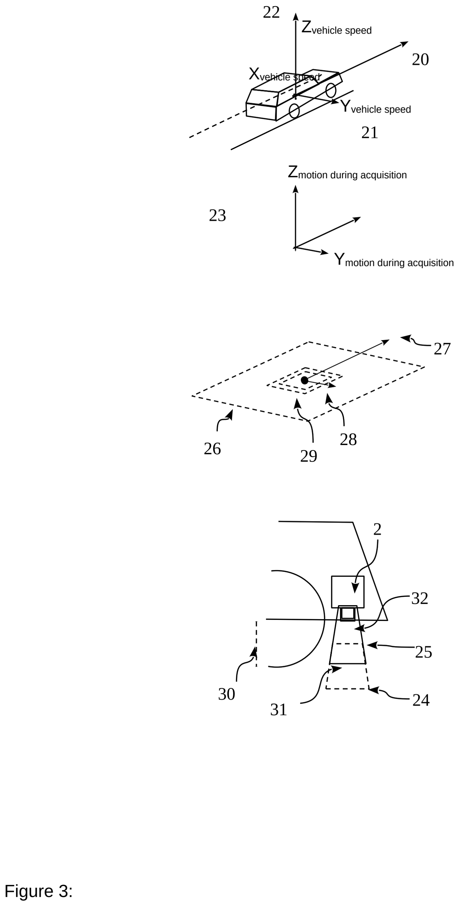

On *Figure 3* requirements for the system are outlined. A vehicle motion on a road could be roughly split into three components: *Vehicle motion on road forward 20* or X axis with a rough range of 36km/h..142km/h corresponding to 10m/s..40m/s (let's keep 36km/h or 10m/s as reference motion for cities and further calculations). Second motion component is *Vehicle motion sideways 21* and at various speed it roughly corresponds to 1m/s. Finally, road pot holes and minor obstacles could make the vehicle jump upwards or downwards providing a *Vehicle motion upwards 22* with 3m/s speed.

Let's consider *Road looking cameras* 2 with *Camera working distance 30* being roughly 20_{cm} corresponding to a car clearance, *Camera field of view 31* with roughly 20_{cm} depending on objective and *Camera angle 32* will be discussed later. The vertical motion would correspond to +/-10cm shown by *Vehicle up position 24* and *Vehicle down position 25.* Objective for road-looking camera and wall-looking cameras will be different due to distance and will be discussed separately.

A standard camera acquires images with exposure time of roughly 10ms with displacement of a vehicle during camera acquisition time summarized on the graph *Vehicle motion during acquisition 23.* Displacement occurs in the main X_{motion during acquisition} by 10cm, by 1cm in the Y_{motion during acquisition} and 3cm in vertical direction Z_{motion during} acquisition. If a standard 12mpix (3000x4000 pixels) camera is used, the three motion directions will correspond in *Acquired image 26* to *Forward motion in pixels 27* of 1000 pixels, to *Side motion in pixels 28* of 10 pixels and *Vertical motion in pixels 29* of 10pixels blur. It is without doubt that such levels of blur are unbearable for existing vision algorithms and devices.

As mentioned above, shorter exposure time for example 1ms instead of 10ms would reduce that displacement to 100,10,1 pixels respectively and further 100ns exposure time to 10,1,0.1 pixel. But such short exposure time would require a very strong light source to be permanently active to compensate 100x shorter exposure time. However, moving at 4x faster speed of 142km/h (40m/s) the motion blur for 100ns acquisition would still be 40,4,1 pixels respectively which is too much.

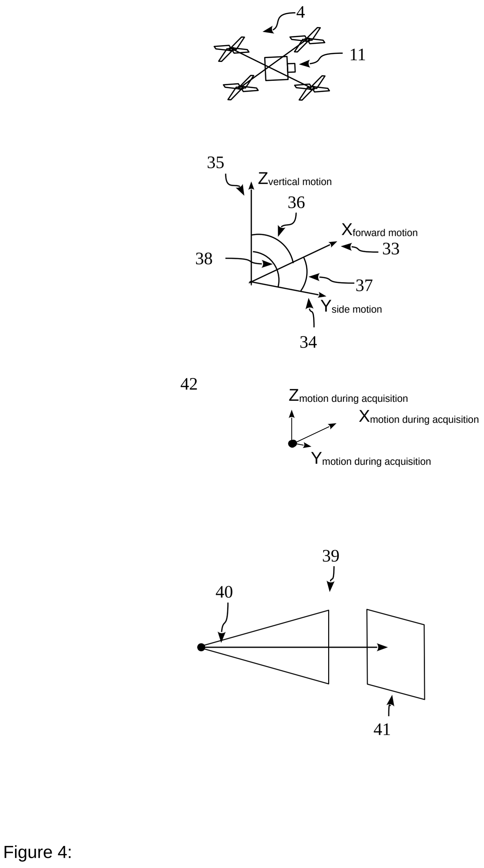

For the *Wall-looking camera* 11 cameras case, shown in the *Figure 4**,* the main direction of drone flight corresponds to *Drone motion forward 33* and would reach 10m/s, *Drone motion sideways 34* would correspond to 1m/s and *Drone motion up 35* roughly to 3m/s in general. For a general image acquisition of 10ms those motions would correspond to 10,1,3 cm respectively forward, sideways and up in *Drone motion during acquisition 42.* Contrary to road vehicle drone rotation due to wind and trajectory changes could be significant and *Drone rotation pitch 36* and *Drone rotation yaw 37* and *Drone rotation tilt 38* could reach 100 degrees/sec and, respectively, of 1 degree per 10ms acquisition.

For analysis of surface structure, *Wall-looking camera 11* would have to have an objective of different type than *Road looking cameras* 2 and be quite close to telephoto lens or binoculars. With quite narrow *Drone camera viewing angle 40* of probably 10 degrees and *Drone camera working distance 39* for orientation among buildings approximately 20m, the resulting *Drone camera field of view 41* will correspond to 3x3m. With 12mpix camera (3000x4000) one obtains 1mm/pix resolution.

During flight, *Wall-looking camera 11* camera would point partly forward and partly sideways and during the acquisition time of 10ms would experience the *Drone motion during acquisition 42* displacement of 10cm forward, 1cm sideways and 3cm up. During acquisition, rotation of 1 degree would make a 30cm displacement at 20m distance in the field of view of 300x300cm. At *Drone camera working distance 39* this 30cm over 300cm displacement would correspond to 300 pixels blur in 3000 pixels image of field of view. So, at rotation blur could reach even bigger levels than at displacement.

For drones a camera with gyro stabilization can reach 0.02 to 0.1 degree stability which would correspond to 0.3 to 3cm motion in the field of view and 3 to 30 pixels blur in image which is sufficient for human eye to consider video smooth, but not sufficient to read out surface structure of 1mm detail. The specifications above witness that with standard cameras and algorithms is not possible to overcome existing main obstacles for this positioning application to function.

### Camera

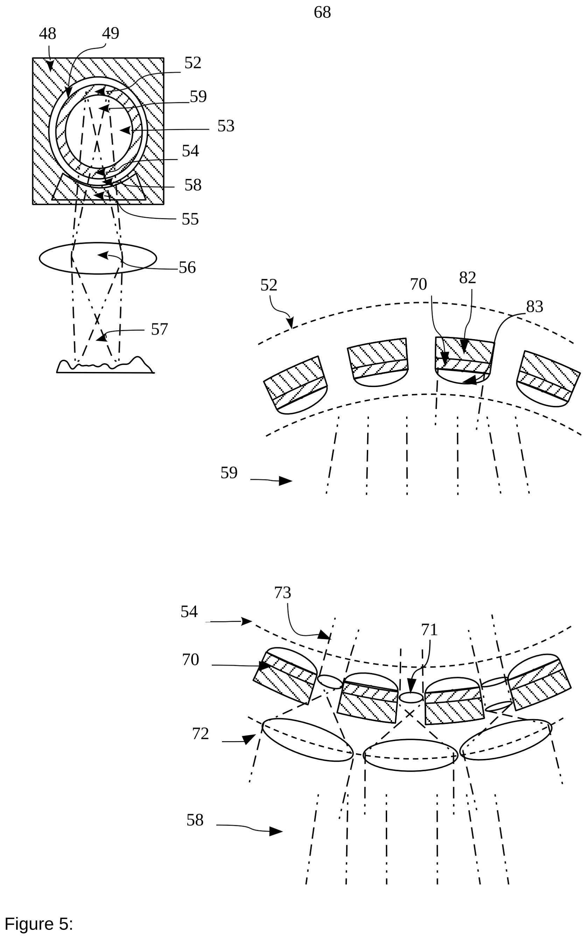

On *Figure 5* device part of the invention is presented and it's a camera with a *Hull 48* with spherical cavity hosting a *Spherical sensor 49* freely rotating in any direction inside that spherical cavity. A *Rays of light 57* from surface go first through a *Lens assembly 56* (that will be different for wall- and road-looking cameras) and through a *Transparent hull front wall 55* forming a *Ray front pre-sensor 58.* As *Spherical sensor 49* is semi-transparent, the major part of *Ray front pre-sensor 58* passes through in *First sensor crossing 54,* then goes through the transparent *Core of sphere 53* to form a *Ray front pre-acquisition 59,* which, in turn, passes through sensor at *Second sensor crossing 52* where light information is actually read by sensor pixels.

In *Sparse sensor embodiment 68* a *First sensor crossing 54* and *Second sensor crossing 52* are shown on the right side of the figure. Spherical sensor surface is composed of *Sparse sensor pixels 70* on *Sensor pixel support 82* and *Condensing pixel lens 83* on top of each pixel. There are *Gaps 71* between *Sparse sensor pixels 70.* The *Ray front pre-sensor 58* is condensed by a bigger *Exterior lens 72* on the outer side of the spherical sensor. Condensed light comes through the *Gaps 71* and restored on other side of the spherical sensor by *Interior lens 73.* The optical effect similar to binoculars will result that most of the outside light will be captured by *Exterior lens 72* as they will be bigger, touching on the outer surface and covering most of the outside of spherical sensor so light will transit through the *Gaps 71.* This way, vast majority of the *Ray front pre-sensor 58* is passing through the spherical sensor at of *First sensor crossing 54* and form the *Ray front pre-acquisition 59* where only small part of the light is lost between *Exterior lens 72.* Also, *Sensor pixel support 82* of *Sparse sensor pixels 70* does not let light go through.

The *Ray front pre-acquisition 59* performs *Second sensor crossing 52* where part of the front is absorbed by *Sparse sensor pixels 70* with their *Condensing pixel lens 83* and sensitive part turned inward of the spherical sensor. Part of the front will go through *Gaps 71* in the inverse direction first through *Interior lens 73* then through *Exterior lens 72* and is lost. It is clear that *Sparse sensor pixels 70* will sub-sample the *Ray front pre-acquisition 59.* This effect would correspond to a situation where a normal sensor would use a sparser Bayer matrix or would use a different binning. It can be compensated with some calculations and during 10ms acquisition, sensor motion will reduce that sub-sampling effect averaging pixels without being disturbed by small lenses.

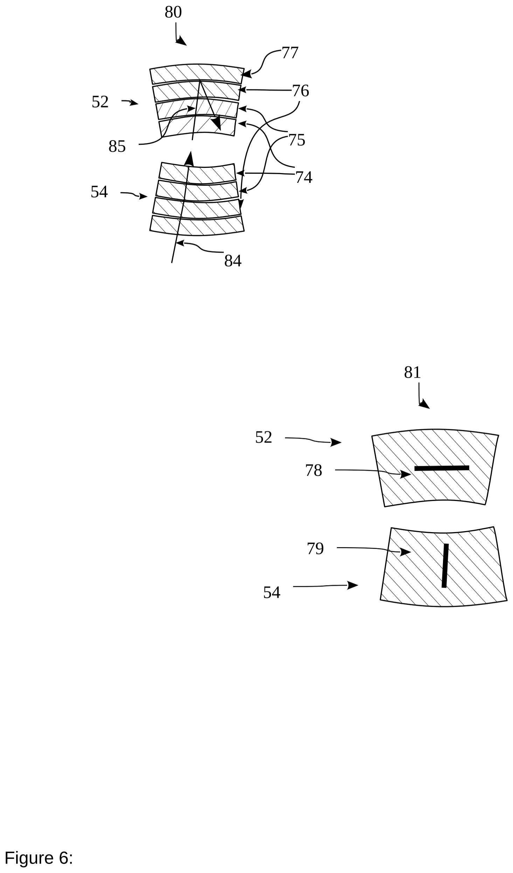

Two other sensor embodiments are presented on *Figure 6* with *Transparent sensor 80* and *Activable sensor 81* (both have no gaps). *Transparent sensor 80* is similar to Sony's Foveon sensor where *Red layer 74, Green layer 75* and *Blue layer 76* are sensing red, green and blue spectrum are stacked and let some light through. The *First sensor crossing 54* will let part of the light through and absorb a part absorption while the *Second sensor crossing 52* will actually read out part of the passing light and let part through. Additionally, a semi-transparent layer similar to cat's eye *Semi-transparent tapetum lucidum 77* will let the *Passing ray 84* pass at *First sensor crossing 54* and reflect *Passing and reflected ray 85* at *Second sensor crossing 52.*

In another embodiment *Activable sensor 81* pixels of spherical sensor can be programmed to let the light through with liquid crystals switched off thus blocking (and absorbing) the light and liquid crystals switched on letting the light through. At *First sensor crossing 54* the *Liquid crystal off sensor pixel 79* light goes through the sensor (and pixel is programmed to not perform read out) while at *Second sensor crossing 52* the *Liquid crystal on sensor pixel 78* will absorb the light. Both embodiments have no gaps between pixels.

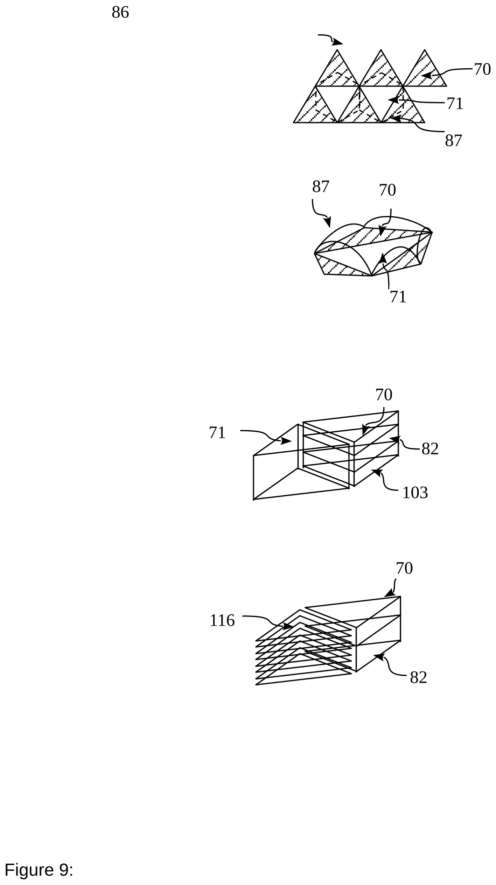

Three variants of sphere tessellation with sensor pixels are disclosed without limiting a generality of the invention and shown on *Figure 9**. Sparse sensor embodiment 68* of *Spherical sensor 49* is shown with *Gaps 71* between pixels. One can see the tessellation of *Gaps 71* and *Sparse sensor pixels 70* for optimal sphere coverage. First *Tessellation triangular 86* is where *Gaps 71* and *Sparse sensor pixels 70* are alternated. Additionally, the exterior lens (*Exterior lens 72* in *Figure 5*) is actually a *Hexagonal condensing lens 87* (dashed) densely covering all exterior area so that all *Ray front pre-sensor* 58 is passed through *Gaps 71.* Also, this *Tessellation triangular 86* is compatible with two other sensor embodiments without gaps (*Transparent sensor 80* and *Activable sensor 81*)*.*

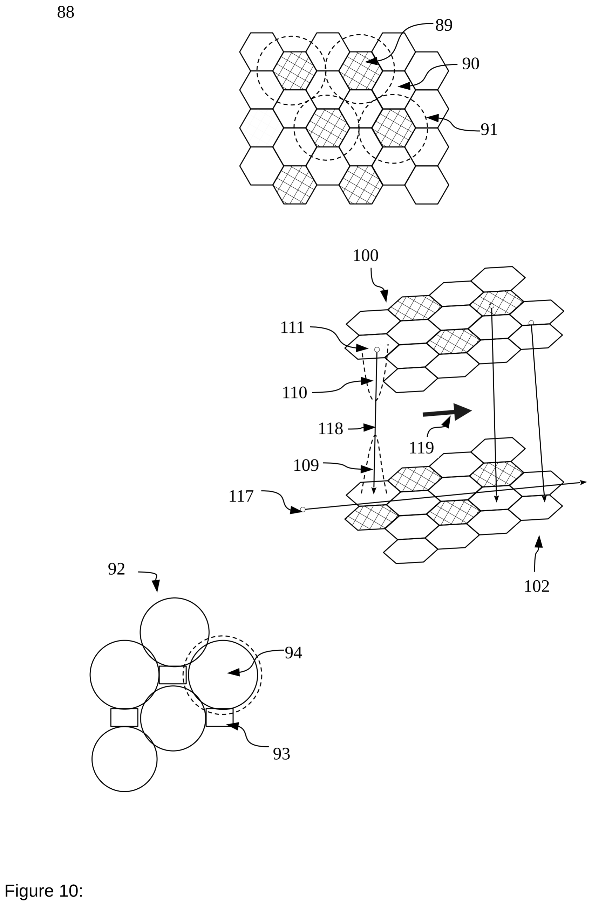

Second variant, shown on *Figure 10**,* is a *Tessellation hexagonal 88* suitable for sphere is where *Hexagonal gaps 90* and *Hexagonal pixels 89* (hatched) are alternated. The exterior lens *(Exterior lens 72* in *Figure 5*) is actually circular with some gaps *Circular hexagonal condensing lens 91 densely* covering external surface so that all light *Ray front pre-sensor 58* is passed through Gaps *71.*

Third variant is *Tessellation square-circle 92* is where *Square pixels 93* are alternated with *Circular gaps 94* and circular lenses. In this case, pixels could remain square being easier to manufacture and assemble together. *Circular gaps 94* are better compatible with exterior lens (*Exterior lens 72* in *Figure 5*) and thus easier to fit with lenses.

### Lenses

*Lens assembly 56* on *Figure 5* require two functionalities. First is an important depth of field that can tolerate or significant scene depth discontinuities (buildings) while being in focus or significant camera (vehicle, drone or person) movement in Z direction while keeping all viewed surfaces in focus and without deformations and blur. Depth of field can be achieved with telecentricity of lens assembly providing almost parallel rays on object side or with a very closed aperture. Second (quite related to first) is absence of image deformation while moving along Z (depth) direction or with depth discontinuities in Z/depth direction.

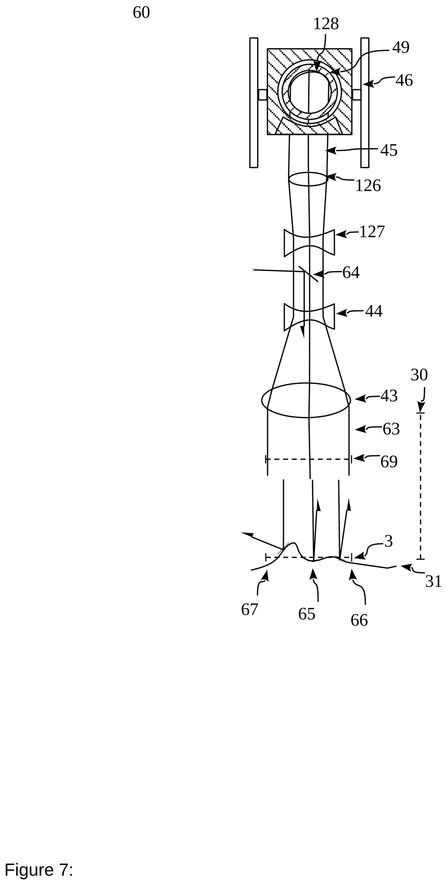

*Lens assembly 56* of *Figure 5* for cars, drones and persons vary in requirements and separate designs are disclosed. On *Figure* 7 a more detailed description of lens assembly is shown for cars *Objective for car 60* and drones *Objective for drone 61.* For blind person, camera will be fixed on a walking stick and objective being closer to an objective for a car or on a hat and be closer for drone objective (a combination of two variants is possible), but with a different algorithm that can account for stick movement at each step or stick inclination and usual movements from side to side.

Optical lens assembly for a car require close working distance *Camera working distance 30* viewing the *Viewed road surface patch 3.* and it should deal with abrupt changes of working distance *Vehicle down position 25* when wheel enters a pothole or encounters an obstacle which amounts to 50% of working distance. *Objective for car 60* represents a set of lenses that can reach depth of field or with a telecentric lens or with a narrow aperture. Telecentricity is a property to have parallel light rays on sensor side of the objective or on object side (pointing to a scene) or both. Having telecentricity on object side in front of the objective provides *Parallel rays object side 63.* Field of view in this case is defined by objective diameter on object side *Object side objective diameter 69.* Field of view is defined by acquisition time as a surface point should remain in the field of view during the acquisition time. With speed of 36km/h (10m/s) and 20cm working distance, point moves in the field of view at 10cm/10ms speed. With camera exposure of 3ms, 3cm field of view is sufficient. Objective diameter on object side represents an important cost and smaller it is, less would be camera cost (champagne bottle size objectives cost few thousands). Thus, lowest exposure sufficient to acquire surface point in given illumination will be selected and will define *Object side objective diameter 69.* It should be noted that each pixel of the spherical sensor has a different integration interval i.e. each pixel will be "responsible"/following a separate point of the surface and that pixel integration time will correspond to passage of that surface point in the field of view.

Telecentric objective would convert parallel rays *Parallel rays object side 63* (viewing angle 0) with *Positive lens group 43* that condenses rays, then straighten them with *Negative lens group 44.* After a parallel part, rays are expanded back with another *Negative lens group sensor side 127* and condensed further with another *Positive lens group sensor side 126. If* t If objective has also telecentricity on the sensor side, rays arriving to the sensor are parallel and correspond to *Parallel rays sensor side 45.* That last two groups of lenses are designed so that surface of focus *Focus surface 128* instead of being flat, as for usual flat sensor, is actually spherical and aligns with inner surface of the *Spherical sensor 49.* It should be noted that telecentric objectives have quite a significant depth of field i.e. percentage of working distance that remains in focus and so movement in that interval preserves objects in focus. Telecentricity on the object sides resolves the two problems. Depth of field keeps objects in focus even with some motion. Parallel rays keep proportions the same independently on the Z position. However, focusing at different planes is in its majority solved by telecentricity that has quite depth of field. Blur is resolved by as close to parallel rays as possible and low angle which is the same.

Additional and optional mechanism could be foreseen in case of insufficient depth of field to cover abrupt vertical car motion. In case of Z motion (car jumps) image would not change size and correspond to same surface area and parallel rays already guarantee that there is no deformation. However, if surface moves out of depth of field range, the image would become unfocused. The relative position between *Positive lens group sensor side 126* and *Spherical sensor 49* could be adaptable to acceleration. But, additionally and optionally *Hull 48* could be positioned on sliders *Stability sliders sensor 46* suspended with springs or shock-compensating. Without acceleration, that relative position would correspond to a sensor focused at surface located at standard working distance in front of the objective (approx. 20cm for car clearance). In case of vertical acceleration or abrupt shock, *Hull 48* would move in the corresponding direction to adapt focal distance on sensor side and have the surface in focus. It is, in fact, an autofocus based on acceleration.

It should be noted that each pixel of the spherical sensor is doing acquisition independently. Such pixel is following a separate surface point and will integrate light during time interval during which that point crosses the objective field of view.

For an *Objective for drone 61* requirements for optics, as was described in *Figure 1**,* are different. At working distance of roughly 20m buildings create depth discontinuities of up to 10m while viewed in the same image. Focusing can help to have only surface of one building in focus and not others, but slant of that wall cannot be controlled and thus cannot be addressed with focusing. So, requirements for depth of field of objective are quite high. Purely telecentric lens is not possible as requesting outer objective diameter of let's say 10cm will create objective that is too heavy for a flying vehicle. Objective lens of telephoto type is appropriate with viewing angle ranging between 10° and 1°. At 20m distance, such angles provide that light rays are very close to parallel on object side and thus objective is almost telecentric. The field of view is sufficient. At 20m distance, 10° corresponds to 3x3m surface viewed by 3000x3000 camera and thus 1mm/pix. Correspondingly 1° gives 30cm field of few and 0.1mm/pix which is sufficient resolution. 10 degrees at 20m - depth of field is not high so resolved with aperture. Closing aperture, one must compensate with light and it's outlined below. Rotation 1 degree per 10ms acquisition time thus corresponding at 20m distance to 30cm displacement. For 10 degrees angle it's 10% of field of view and for 1 degree it's 100%.

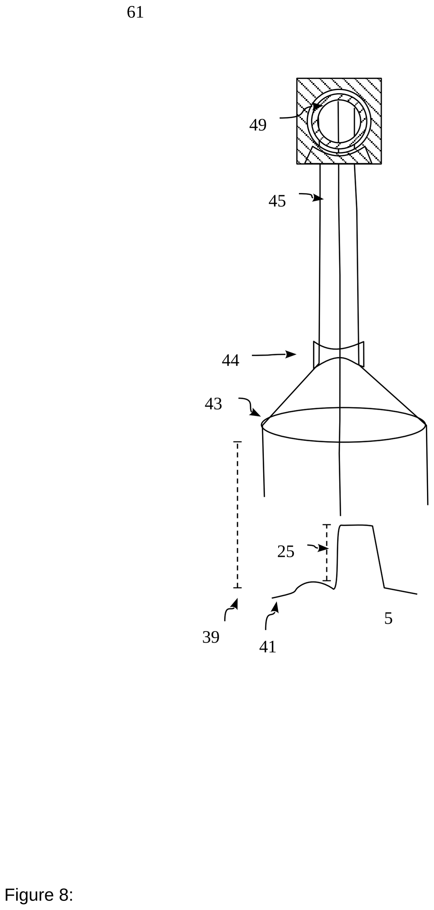

Drone position is highly unstable and its rotational component is very significant creating 300 pixels blur. The primary problem is still the motion blur. Secondary problem is the depth of field. On *Figure 8* it is shown that telephoto lens has *Positive lens group 43* and *Negative lens group 44.*

Another aspect of objectives is light. As briefly mentioned above, surface structure can be revealed essentially with shadows of a directional light coming from the side and each side illumination direction reveals only a part of the surface structure. Light from all directions would remove shadows and majority of information about the surface would be lost. This means that with directional ambient light there is no guarantee to obtain information about the surface.

To obtain complete information about surface the type of illumination that can be used in this case is a coaxial light shown in *Figure 7**.* In *Objective for car 60* a source of light injects light at *Coaxial light injection 64* with a dichroic mirror where *Parallel rays object side 63* (internal) are present, a light pencil beam that is aligned with optical rays is produced. When such parallel rays hit the surface, it is reflected depending on surface orientation. If object surface is perpendicular to the ray a *Reflected ray 65* is produced. If surface patch is positioned at certain angle, a *Partially reflected ray 66* is produced. If angle of surface patch is more than 45 degrees with respect to a ray front orientation, a *Deviated ray 67* is produced.

The principle of coaxial illumination is that among rays reflected from surface only rays that follow (parallel) to the optical axis of the telecentric objective arrive to the sensor in their entirety. Thus, *Reflected ray 65* will produce a bright pixel in the image and witness a presence of perpendicular surface orientation. The *Partially reflected ray 66* will produce a grey pixel and *Deviated ray 67* will correspond to black pixel. This means that with telecentric objective and coaxial illumination, image intensity will reflect the orientation of surface with bright colors when surface is flat and perpendicular to optical axis and gradually shift to dark colors where surface orientation deviates from to optical axis. We thus obtain a direct and unaltered information about surface structure.

Additional two aspects of coaxial light use should be addressed. First, this light reveals only information about surface orientation but loses color information about surface. Second, ambient light will, at least partially, interfere with coaxial light and contaminate information about surface orientation. In optional embodiment, two images two images can be acquired. As rotating sensor follows points on the surface and no image registration is required, one can easily take two subsequent images with 3ms acquisition time. Coaxial light could be switched on during acquisition of the first image and switched off during acquisition of second. Difference between first and second image would provide coaxial light component only and thus information about surface orientation only. Second image alone would provide information about surface color. way light coming from ambient illumination be phased out. power of coaxial. Optionally, coaxial light can be produced in certain wavelength interval (for example blue) and filtered at dichroic mirror, but it's a more complex design.

### Sensor suspension and motion

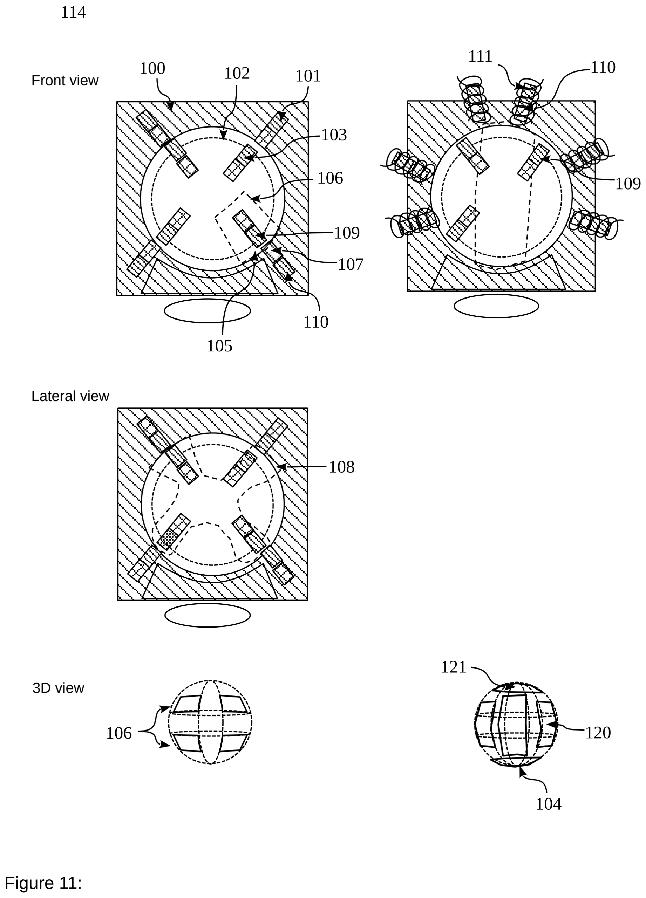

For spherical rotating sensor to function, it needs four functionalities that are illustrated on *Figure 11**.* For a sphere sensor to operate it needs a suspension mechanism allowing it to rotate in in any direction, a force that rotates the sensor in controlled direction and compensates camera movements, a power transmission to the rotating sensor from hull to power the sensor and electronics and, finally, data transmission channel back from rotating sensor to hull to read out image.

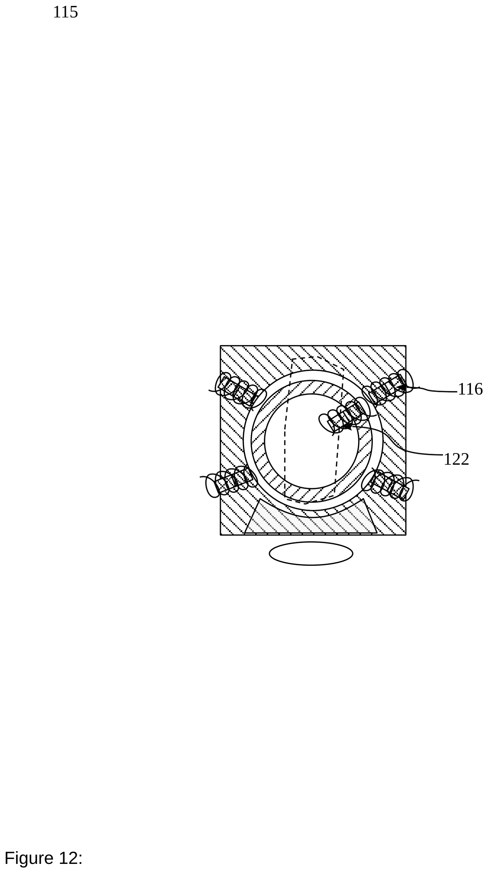

Two electromagnetic embodiments are disclosed: *Passive electromagnetic embodiment 114* on *Figure 11* and *Active electromagnetic embodiment 115* on *Figure 12* with front, side and 3D views. First functionality (*Suspension 99*) is illustrated on left side of the figure. The hull of the camera is actually a *Stator 100* and rotating sensor is a *Rotor 102.* Magnetic suspension operates with magnetic force that is generated by passive permanent magnets on *Rotor permanent magnet 103* and passive *Stator permanent magnet 101* on stator. In case of *Active electromagnetic embodiment 115* on *Figure* 12 suspension is provided by *Passive electromagnetic coils 122* on rotor and *Active electromagnetic coils 116* on stator. Passive suspension is preferable as would prevent rotating sensor damaging itself against the hull in absence of power.

A *Rotor permanent magnet 103* has its *South pole rotor 109* (diagonal hatching) pointing outward center of the rotor and *Stator permanent magnet 101* has its *South pole stator 107* (cross hatching) pointing inwards respectively (shown in front view and side view). Position of permanent magnets on the stator is limited to several *Area of stator permanent magnets 106* that are placed as latitude patches on the spherical surface and provide sufficient area of contact to maintain rotor in suspension in any position. As shown on side view, patches of *Area of stator permanent magnets 106* could be extended on sphere sides to diagonal X-shape area *Spider area of stator magnets 108* (dotted).

A *Suspension contact points 105* is composed of *South pole rotor 109* on *Rotor permanent magnet 103* and adjacent one or several *South pole stator 107* in *Area of stator permanent magnets 106* on the stator repulsing each other. A *Rotor permanent magnet 103* are placed densely over the surface of the rotor, thus a sufficient number of *Suspension contact points 105* is always present in any rotor position and provide sufficient suspension surface for rotor maintaining it from opposing directions in the center of the spherical cavity.

*Area of stator permanent magnets 106* is designed to provide *Suspension contact points 105* for the rotor from multiple opposing directions, but it leaves complementary area without magnets (as can be seen on side and 3D view) for other functionalities. First area without permanent magnets is *Area without magnets for light 104* at the bottom of the spherical cavity for light to come from lens assembly. Second area at the sides is *Force application area 120* reserved to apply a magnetic force rotating the spherical sensor. Third area *Sensor read-out area 121* is at the top of the sphere to read-out image from sensor. Areas without magnets are shown on lower right part of the figure.

Second required functionality after suspension is an application of a magnetic force to rotate the spherical sensor with functionalities similar to electric motor types. Rotation could be high-speed with main direction in case of fast directional motion of the camera or low speed but abrupt multi-directional motions to maintain a camera stability. Attraction force is created by *Attraction coils 111* present in *Force application area 120* on the hull. Those coils generate a magnetic field with *North pole stator 110* on the inner side of the hull turned toward sphere center and creating attraction toward *South pole rotor 109* of *Rotor permanent magnet 103* (in case *Passive electromagnetic embodiment 114).*

In case of *Passive electromagnetic embodiment 114* with passive magnets on rotor and *Tessellation triangular 86* (illustrated on *Figure 9*) the *Rotor permanent magnet 103* is placed below the *Sensor pixel support 82* with south pole turned towards the hull (outwards from sphere center) and *Sparse sensor pixels 70* being on the other side of support. *Gaps 71* complement triangular tessellation. In case of *Active electromagnetic embodiment 115* the *Sparse sensor pixels 70* are placed on *Sensor pixel support* 82 and *Active electromagnetic coils 116* are placed around *Gaps 71.*

In the case of *Tessellation hexagonal 88* and *Passive electromagnetic embodiment 114* (on *Figure 10**)* situation is similar to above and rotation force is applied to rotate sensor and compensate for camera motion as follows. Let's assume that *Stator 100* need to rotate Rotor *102* to follow a *Required rotation trajectory 117* that is a direction compensating camera motion. This trajectory is converted into a sequence of activations of *Attraction coils 111* to generate *North pole stator 110* that will create *Individual attraction force 118* varying in time and strength to one or several *South pole rotor 109.* Combination of all *Individual attraction force 118* would create a resultant *Resultant force 119* that would rotate the sensor along *Required rotation trajectory 117.* Forces can be applied only at areas *Force application area 120* where *Attraction coils 111* are present. This functionality is similar to stepper motors where precision of rotor position is defined by number of magnet poles. There is also a microstepping algorithms that position the rotor to sub-pole precision.

*Active electromagnetic embodiment 115,* shown on *Figure 12* is characterized by *Passive electromagnetic coils 122* (instead of permanent magnets) on the rotor side similar to the *Active electromagnetic coils 116* on the stator side. Suspension and rotation in that embodiment are provided with same effect of slip as in asynchronous electric motors. *Active electromagnetic coils 116* on the hull induce magnetic field which produce current in *Passive electromagnetic coils 122* that create magnetic field in the latter that create attraction force between two coils and aligns them. Suspension in this embodiment is achieved by attraction between rotor and stator from opposite sides directions. Same attraction is at the origin of rotation of the rotor side. By changing attraction from *Active electromagnetic coils 116* microstepping allows to move to next attraction forces links and, consequently, rotate the rotor. The *Active electromagnetic embodiment 115* is less advantageous than the first. Power is needed for suspension and its interruption could cause rotor touching the hull and damaging itself and hull surface at high speeds. Coils on the rotor makes its design more complicated. An optional embodiment would correspond to rotor coils be powered and some electronics controlling their activation in coordination with stator coils.

### Registration algorithm

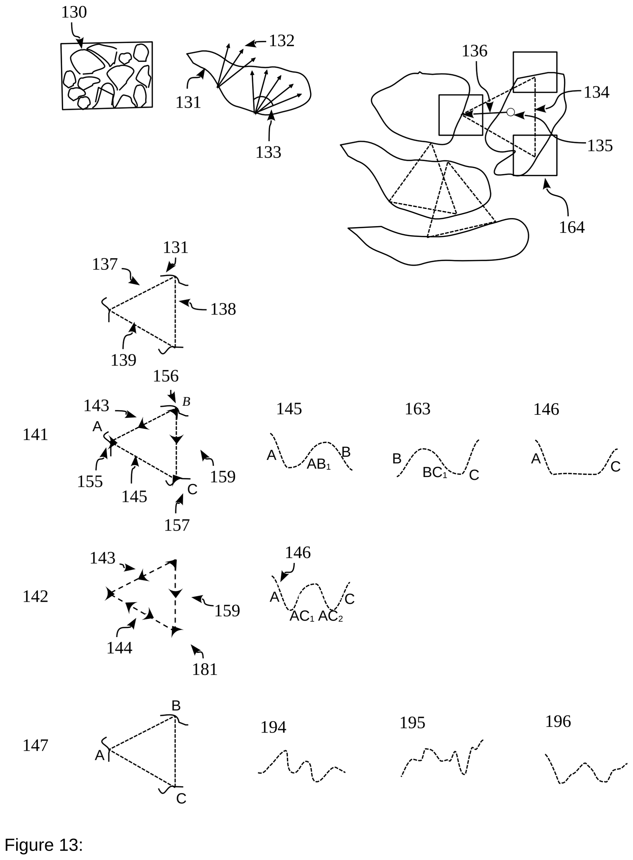

Algorithm to recognize surface patch has several variants in disclosed embodiment as a classical computer vision algorithm, a mixed geometry-ai approach or as pure ai-based. Embodiment of a classical algorithm is described in figure *Figure 13**.* An *Image of the surface 130* contains surface texture with a lot of edges of various magnitude (in case of greylevel image it's 1D transitions between dark and bright intensities in case of color transitions are in 3D RGB space). Position, shape and magnitude of those transitions reflect unique surface properties and sought to be extracted from images.

Comparing *Image of the surface 130* to a database of surface representations should respect real-time operation with milliseconds response and low resources footprint (CPU, memory, database storage size, power). Thus, it cannot be done by comparing image patches with respect to all pixels and should be very optimized with constant-time indexing. Such comparison would require a reference in the field of view with respect to which it is made. A solution is to find some "anchors" that are present, for a given type of surface, at stable and widespread positions in the image and use them as starting points of comparison of image vicinity around them. Such representation of the image would be compared with similar anchors of surface representations in the database. Every such anchor would provide a coordinate system with a center point position, orientation and scale and comparison would use that geometric information for aligned comparison of image properties with those stored in the database.

Conditions for existence of *Anchor 134* are four-fold. Anchors have to densely exist in any image of given surface type and given edge density. Second, anchors should be limited in the image to not have all possible pixels as anchors. This limitation comes with geometrical and intensity constraints (both will be discussed in paragraphs below). Third constraint is that anchor should be invariant to transformation that will be associated with given image acquisition. For cars it's essentially RTS (rotation, x,y translation and scale) for drones affine transformation steps in as wall can be quite oblique to a line of sight. We can neglect perspective transformation at this drone distance and narrow field of view. Fourth, anchor should be very stable in the image i.e. be reliably found at the same position and orientation with respect to surface despite image acquisition conditions, camera position and points from which it is searched for. It would thus provide reliable information about x,y position in the image, main orientation and scale. In *Figure 13* several *Anchor 134* with *Position center 135* and *Orientation and scale vector 136* are shown (dashed triangles in this embodiment case).

Analysis of the image starts from all points that are present on *Edge 131* (which is defined as sufficient intensity transition) and goes in *Exploration directions 132* whose *Angle 133* range is defined relatively to edge orientation.

Initial limiting geometrical constraint of *Anchor 134* mentioned above in one embodiment could be realized with a triangle whose corners A,B,C are laying on edges *Edge 131.* Additionally, such triangle could be constrained to have all three sides equal, two sides equal or, for the case of peoples and drones (needing affine transform), no constraints on sides as angles cannot be respected under affine transform. Let's for the sake of simplicity limit explanation to the case where sides AB *side 137* a *BC side 138* a *AC side 139* are identical.

After geometric constraint, the second constraint of *Anchor 134* is about intensity (in case of monochrome image) or three or more colors (in case of RGB or multispectral images). Further on, description concentrates on intensity without loss of generality. For triangle sides, those properties correspond to intensity profiles along those lines and could be split into two classes - discreet and continuous (either or both can be used in practice). Discreet properties correspond to type of significant transitions at *Anchor 134* corners A,B,C and to number of such transitions along triangle side. Continuous properties are statistics on entirety of intensity profile values along each triangle side.

For discreet properties, significant intensity transitions are indicated on the figure with small oriented arrows at A,B,C corners and along each of sides *AB side 137, BC side 138* and AC *side 139.* Direction of each arrow indicates the transition from brighter, higher intensity to the darker, lower one. There are several possible intensity constraints embodiment and we will look into two discreet and one continuous one. On *First intensity constraint 141,* corner A of the triangle is laying on an edge that is a transition *Corner transition A 155* in AB and AC directions from bright intensity towards dark one (descending). For interpreting the arrows, for that same constraint, an approximate *Intensity profile AB 145* shows intensity transitions on AB side. Going from A to B, *Corner transition A 155* corresponds to descending slope, *Corner transition B 156* is descending (if same direction is kept) as well and one additional transition is imposed as *Side transition AB1 143* on AB side. Also, a transition *Side transition BC 1 159* on BC side (where *Corner transition C 157* is descending) illustrated with intensity profile *Intensity profile BC 163.* Intensity profiles *Intensity profile AC 146* shows the AC side. To summarize, an anchor could be a triangle with equal sides and intensity transitions as described at corners A,B,C, one additional transition on sides AB and AC and no transitions on side AC. Such anchor in an image would be present sufficiently frequently and not too densely though.

Another possible *Second intensity constraint 142,* is where AB side has one transition *Side transition AB1 143,* the BC side has one *Side transition BC 1 159* but the AC side has two *Side transition AC 144* transitions AC1, AC2. Directions of transitions are indicated with arrows and shown on approximate *Intensity profile AC 146.*

One possible *Continuous intensity constraint 147* is where *Continuous intensity profile AB 194, Continuous intensity profile BC 195* and *Continuous intensity profile AC 196* are considered in their entirety without concentrating on discreet transitions. An option when a sum of intensity variations is calculated along each profile (sum of all absolute difference of subsequent intensity values). Three such values for each of the sides AB, BC and AC could be linked by a property - in the simplest case they should be equal or they could follow a certain proportion. This constraint is more reliable than discreet one above as no dependence on discreet transitions is present. Other more fine-grained statistics can be foreseen as moments of intensity above and below intensity median of the profile and with respect to profile length.

Search for an anchor with constraints as above is performed (see *Figure 13* top) starting from edge points *Edge 131* in various directions and finding a triangle of points ABC with given geometric constraints and intensity constraints on sides AB, BC and AC. Additional condition for anchor to be validated is the absence of another anchor in the *Unicity vicinity 164* of each corner of the found one and with identical constraints present. An anchor that is locally unique provides a reliable reference with stable x,y *Position center 135* and *Orientation and scale vector 136* that define a coordinate system that will be used in comparison of unknown image with a database.

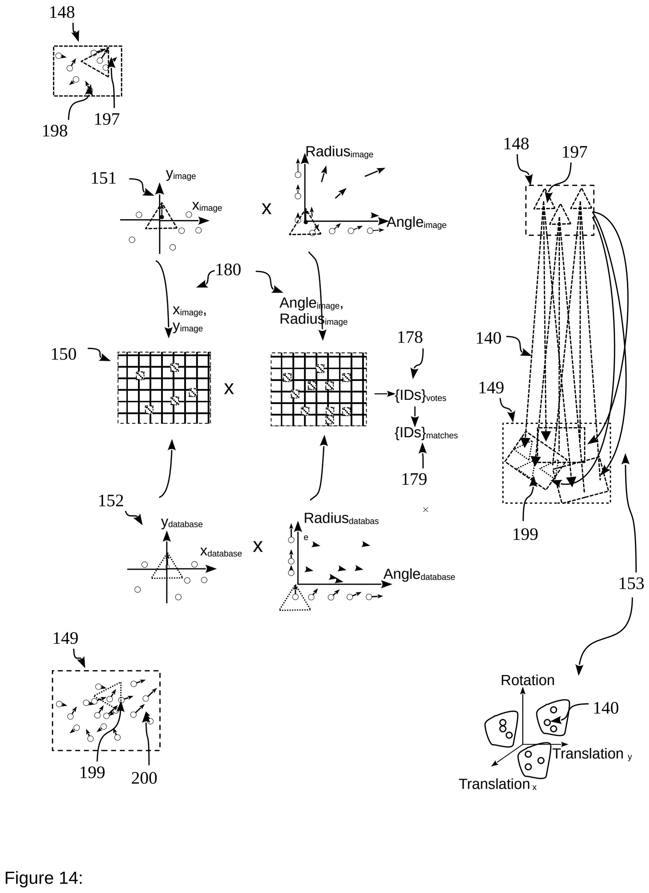

Once a set of *Anchor 134* was constructed in *Input image 148* of the surface it should be matched (registration) to the database. Matching is performed with several fast-indexing steps to have constant response time (and outlined in *Figure 14*)*.* Ultimate goal of the matching is to calculate a coordinates transformation or alignment between image and coordinates of the surface stored in the database. This transformation is essentially a translation (x,y) for cars corresponding to a position on the road. A minor rotational component could be calculated indicating car orientation, but it can be deduced from sequence of previous points. For drones and persons, transformation targeted includes translation in x,y i.e. positions on the road and two axes rotation with two angles. Distance to the surface could be deduced from anchor size in the image, optical properties of the objective and (if present) focus information.

Prior to registration, indexing data structures are pre-computed from the database in offline mode and used later during registration of input images to provide rapid response. The *Database representation of anchors 149* where anchors are vectors with 2D starting point, orientation and length is used to compute the indexing structures. Each database anchor is selected in turn as *Central anchor in database 199* and transformed bringing its coordinate system to canonical form *Normalized database anchor space 152* i.e. *Orientation and scale vector 136* becomes a vertical vector of unit length and its *Position center 135* becomes a center of coordinates (0,0). Same transformation is applied to *Neighbor anchor databaase 200* within sufficient distance from *Position center 135* defined by size of *Orientation and scale vector 136* (for example radius of 10x this vector). Transformed neighbor anchor is a 4-tuple (x_{database}, y_{database},angle_{database}, radius_{database}) in 4D normalized space defined by position of center (shown as one 2D coordinate system x_{database}, Y_{database}) and angle and radius 2D coordinate system shown as angle_{database}, radius_{database}.

Those 4-tuples are then inserted into the *Anchors indexing structure 150* that is a 4D discreet indexing structure which is shown on the figure as "multiplication" of two 2D spaces. For all anchors in *Normalized database anchor space 152* whose x,y of center and angle, radius falls with some tolerance of one cell of 4D of the indexing structure an id of the *Central anchor in database 199* is inserted in that cell. So, with a key (x,y,angle,radius) the indexing structure allows to know the ids of anchors who have a neighbor in this position and orientation (in coordinate system of normalized with respect to central anchor). When inserting information into indexing table, it can be redundantly inserted into neighboring cells with some tolerance i.e. each transformed anchor parameters inserted not only to the bins to which it was discretized, but also bin neighbors. This saves time at registration of unknown image as only one vote is sufficient to fetch candidates.

First step of registration of *Input image 148* with database map of surface *Database representation of anchors 149* is calculating anchors and transforming them to same normalization space as above. Each anchor is used in turn as *Central anchor in image 197* for normalization transforming it with its parameters (x₀, y₀, angle₀, radius₀) from input image to canonical coordinates *Normalized image anchor space 151* where selected anchor becomes (0,0,90,1) and its *Neighbor anchor image 198* parameters become (X_{image}, Y_{image}, Angle_{image}, Radius_{image}), made discreet and used to *Vote 180* into the indexing structure *Anchors indexing structure 150.* This operation produces a set of anchor ids correspondences *IDs voted 178.*

Votes for ids of *Central anchor in database 199* if their number is above a certain threshold are retained as a match and its id added to a set of matches *IDs matched 179*. At this indexing step, indexing structure can be narrowed to certain map coordinates (for example corresponding to a city section) and only ids from that part will be used in indexing speeding up the computation.

Another embodiment of anchors indexing is to build groups of anchors and use those groups for indexing. In this case a group of neighboring anchors is constructed as a graph with distances and orientations to its neighbors. Parameters of those graph branches (such as direction and distance) are used to build indexing structure voting for ids with more dimensions. Ai-based indexing could be used by training a net to match a pattern of normalized neighbor anchors from *Normalized image anchor space 151* to the id of center anchor. Advantage is that no discretization is needed, however ai network, once learned, cannot be narrowed on the fly to a surface portion and to have optimal matching speed separated neural nets for each surface section should be used.

Each match in *IDs matched 179* of *Central anchor in image 197* to *Central anchor in database 199* is a correspondence between one image anchor group and one database anchor group and is actually a geometric transformation *Matching anchors transformation 140 (**Figure* 13 lower right). It can be seen as a dot in 3D space of transformation parameters (translationx, translation_{y}, rotation). Those transformations are aggregated in that space across the image anchors with clustering method getting consistency between matched anchors position, orientations and scale (anchor centers could match, but orientations will diverge). Obtained *Transformation candidates stage 1 153* is a full transformation from whole input image to specific position on a database map of the surface. Outcome of the first indexing step is thus a set of transformations. That first indexing step takes advantage from anchors availability early in the registration algorithm to narrow down transformation space to few transformations *Transformation candidates stage 1 153* (which can be seen as probability of transformation) in shortest time, but is not yet a guarantee of precise match with big database.

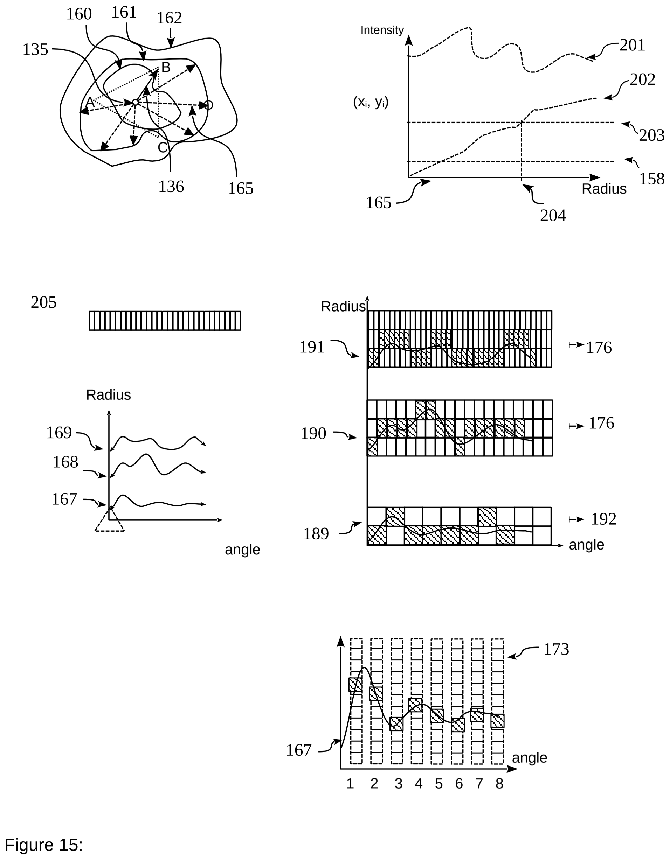

Next indexing step, illustrated in *Figure 15**,* goes into more details of image properties around anchors starting from its reference point *Position center 135*. At first an *Intensity scale 158* is defined as an average of intensities transitions range at corners A,B,C. For a normal grey scale image with 0..256 range a moderate edge transition would be from approximately greylevel 50 to 110 and thus give a range of 60. An average of three corners would provide value from same interval though more robust.

Then, starting from center point *Position center 135,* image is analyzed along certain number of *Analysis directions 165* uniformly distributed in radial dimension. An intensity profile *Intensity profile explored 201* is built along radius of each *Analysis directions 165.* One embodiment is to sum intensity variations i.e. add up any subsequent intensity changes (without sign). On the intensity graphic, the sum of intensity variations along ray is represented *by Sum of intensity variations 202.* Once it reaches first *Threshold 203,* a point *Radius of threshold excess 204* is set on that *Analysis directions 165* ray. First threshold could be a multiple of *Intensity scale 158* for example 3 times. Set of all points *Radius of threshold excess 204* corresponding to first threshold on all *Analysis directions 165* would form *First outline 160.*

Such geometric curve would reflect intensity properties along each direction around the anchor center. Process continues with summing intensities until second threshold (for example 6 times intensity scale) is reached along each direction thus building *Second outline 161.* Consequently, reaching third threshold (for example 10x) builds *Third outline 162.* Thus, initial step of outlines construction would produce three geometric curves. Shape of three outlines reflects intensity properties around the anchors and can be used for indexing. As outline naturally becomes bigger when radius from the center grows, an option is to have the number of *Analysis directions 165* different for three outlines. In simple embodiment one could have 8 directions for first outline, 16 for second and 32 for third.

The next step is to convert outlines into angle-radius normalized coordinate system *Angle-radius space 205* with x axis as angle and y axis as radius. Orientation of *Orientation and scale vector 136* will correspond to angle 0 on angle axis and full scale corresponding to 360 degrees. Discreet angles of *Analysis directions 165* will define discreet coordinates on angle axis will not need normalization. In affine case for persons and drones two corners of triangle can be used to normalize the angle axis to 0 and 60 degrees respectively. Radius of the outline point along *Analysis directions 165* would become the y axis with 1 corresponding to the length of the anchor *Orientation and scale vector 136.* Normalization gives *First outline canonical 167, Second outline canonical 168* and *Third outline canonical 169.*

Then, each of canonical outlines is converted into discreet curves. Angle axis is already discreet with number of angles corresponding to orientations (though different for three curves), only radius axis should be made discreet. Radius axis values could be scaled by a factor (for example 10x) of the *Orientation and scale vector 136* and making values integer and produce discreet outlines *Discreet outline 1 189, Discreet outline 2 190, Discreet outline 3 191.*

Several indexing embodiments are possible based on discreet curves. First is to calculate individual code for each curve shape as whole curve encoding. Second is to calculate encoding for each ray position i.e. one code per radius.

For outlines with 8 or 32 angles and for example 16 possible radius, one would obtain 16^8=2^4^8=2^32 and 16^32=2^4^32=2^128 possible outlines. Thus 8 angles outline *Discreet outline 1 189* can be represented with *Code of outline 1 192, Discreet outline 2 190* of 64bits/8bytes with *Code of outline 2 176* and 32bits/4bytes and *Discreet outline 3 191* of 128bits/16bytes with *Code of outline 3 177*. Improbable combinations could be excluded reducing those codes by roughly 30% or use sparse coding. Outline codes would be stored with each anchor present in the database.

When codes are computed for each direction (for example for *First outline canonical 167* as shown in middle row on the right of the figure), a binary code is calculated for each direction where bit 1 correspond to outline point position on the radius. This creates *Codes of each direction 173,* as discreet representation versions of the curve.

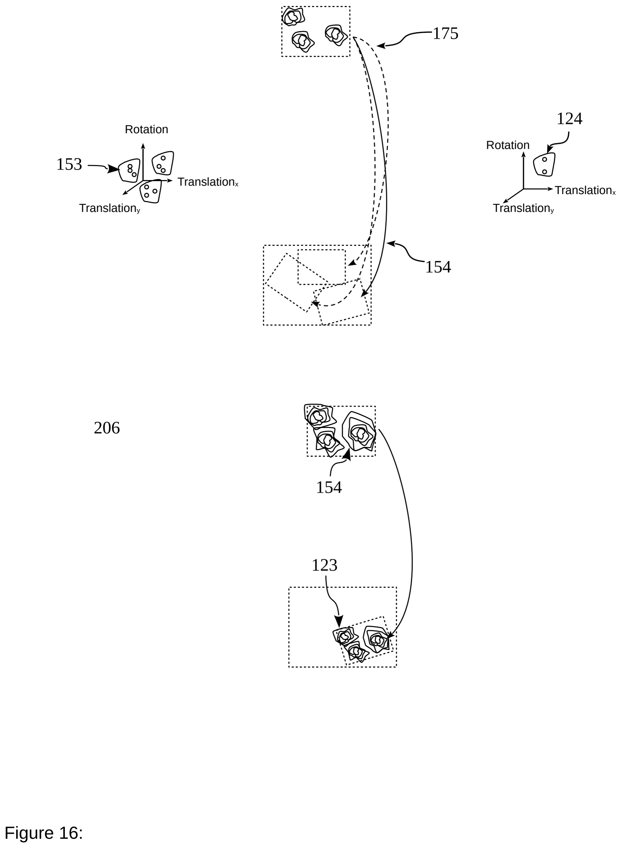

When image from the camera *Input image 148* is being analyzed to be registered to the database surface map it undergoes same steps as above (as shown in of *Figure 16**).* Each anchor vicinity will be analyzed to build its anchor outlines that will be then converted to normalized system and their discreet outlines and outline codes (and/or codes for each direction) computed. From first indexing step with anchors, possible transformations from input image to database map are in *Transformation candidates stage 1 153* and could be non-unique.

Existing matches of anchors are filtered by comparing respective three outline codes in each pair of anchors matched at first and then by comparing discreet outline of two corresponding anchors. To deal with discretization error, comparison could be done with outline codes corresponding to variation of discreet radius varition by +/- 1 discreet value on y axis. In case of one code per radius, comparison simply allows the bit to move one position up and down.

Remained matched anchors, if their number is sufficient, are aggregated into remaining transformations (shown in solid line) *Transformation candidates stage 2 154* with most likely one cluster. Thus, with denser comparison of two indexing steps, transformation candidates will be converging to one.

The last step of validation will be a detailed comparison of the surface by matching areas that are outside of anchors outlines. Several options are foreseen for dense comparison. A direct image comparison with measure of detailed differences is the simplest one (but storing surface images of geographic area is excessive). Another possibility *Detailed comparison beyond outlines 206* is to use extension of outlines going beyond one anchor and propagate outline comparison from several anchors outwards until outlines cover whole image. This implies that such outlines are calculated for database surface *Grown outline in database 124* and stored there. At the last step of registration similar *Grown outlines in image 123* are calculated in input image and compared with those of database. Dense validation of surface confirms exact registration and position.

### Al-based registration

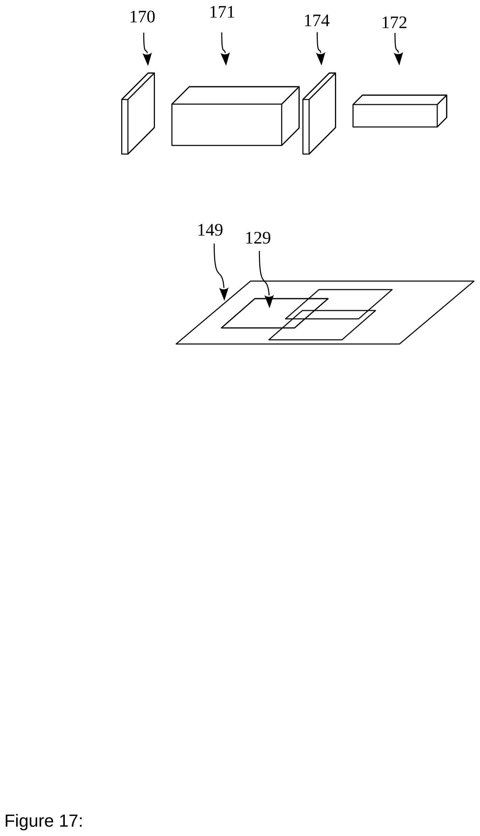

Pure Al-based recognition of surface images would be based on networks of type Fast(er) RCNN that are tuned for object localization with particularity of quite random appearance. This is schematically illustrated in *Figure 17**.* Initial part of such network *Convolutional layers 170* extracts features from the image like edges, corners or other local features. Architecture of the first layers is selected so that all kinds of edges are detected at various resolutions as they represent the vast majority of information about surface. 2D(x,y) size of that layer should allow detection different resolutions of features with use a range of kernels (above 3x3). Pooling could help to perform detection at various resolution, but is less critical than kernels size selection. Detection of features should occur at various resolutions simultaneously.

The key functionality of the neural net in this application of surface registration (by localization) would be in the layer *Grouping layers 171* which corresponds in classical computer vision algorithms to grouping of basic features detected before (like edges). Images of surfaces contain a lot of small edges, but the essence of identification information is found in their sequence, combination, relative position and relative magnitude. Thus, this layer will be big in x,y to allow features from remote locations in x,y be grouped together until unicity of such groups with respect to whole database is reached. Therefore x,y size will be conditioned by surface type and will help to reach unique combinations of features similar to anchors and their surroundings. This layer should also be deeper (bigger in z dimension) so that, unicity combination of features is reached (depth of layer indicates how broadly the combinations are looked for and network can potentially learn).

Additional layer of *Metagrouping layer 174* could be used for combinations of anchor-type areas of the surface to build grouping above the local level and resolve ambiguity if any. Network end with *Fully connected layers 172* that provide classification of patches i.e. their coordinates on the database surface map.

Training of such network would first cut input database surface images *Database of road surface 8* into patches *Patches for classification 129* (for example 50x50 pixels) that would overlap by 10% and labeled them as separate classes. Those patches would be learned by a network and score would be attributed to each patch as to its salience with respect to other patches in their chances to be matched with specific area of the map. If a patch is not representative and could be mismatched with its neighbors, division into patches changes and size of the *Grouping layers 171* adapted. Once, there is a sufficient level of unicity reached, network is ready for classification.

Any of the algorithms above would provide the essential functionality of locating, with sufficient degree of certainty or fully matched surface, the input image on the surface map stored in the database. Such registration gives precise position of a car, flying vehicle or person in space and provides an instant input to navigation system to inform the driver, correct the trajectory or control the vehicle appropriately.

Secondary functionality is to update the database with information that was not matched so that if mismatches are coming from temporary problems like leaves or permanent road damage or repair, the database should be aware to inform following cars about incomplete visibility or new surface.

Summarizing our invention (*Figure 1**)* we have disclosed a device that provides sharp images of very detailed information about surface despite camera motion. And, an algorithm that registers sections of surfaces against a database to obtain precise positioning in space for a variety of subsequent uses (for example navigation).

## Claims

1. A computer-implemented method for determining a position of a vehicle or a person using image data of a surface and a database of surface features, the method comprising:
a. acquiring continuous image data of a surface, the resolution of this image data being between 10 and 0.1 mm/pix;
b. extracting a surface structure representation from the acquired image data,
c. performing a search in a database of surface structure representations for at least one similar surface structure representation corresponding to the extracted surface structure representation;
d. determining a precise position of the mobile entity by reconciling the extracted surface structure representation with the at least one similar surface structure representation from the database.

2. The method according to claim 1, in which the surface structure representation extracted in step b. being **characterized by**:
i. plurality of anchors, each anchor defined by geometric and intensity constraints; and
ii. a set of normalized discreet outlines derived from intensity profiles around each of the plurality of anchors.

3. The method according to claim 1 or 2 further comprising the step of updating the database of surface structure representations with newly extracted surface structure representations that do not match existing representations or show significant differences.

4. The method according to claim 2 or 3, wherein the geometric constraints for each anchor comprise a triangular arrangement of points with corners located on image edges.

5. The method according to claim 2, wherein the intensity constraints for each anchor comprise an analysis of discreet intensity transitions or continuous intensity profiles along sides of the triangular arrangement.

6. The method according to any of the preceding claims, wherein generating the set of normalized discreet outlines comprises converting intensity profiles around each anchor into an angle-radius coordinate system and discretizing the converted profiles along an angle axis and a radius axis.

7. The method according to any of the preceding claims, wherein the search in the database of surface structure representations utilizes pre-computed indexing structures based on encoded versions of the normalized discreet outlines.

8. The method according to any of the preceding claims, wherein updating the database of surface structure representations comprises storing identified differences in a local database and marking them for subsequent upload to a common online database.

9. The method according to claim 1, wherein extracting the surface structure representation and performing the search are executed by a neural network comprising convolutional layers for feature extraction, grouping layers for combining features, and fully connected layers for classification.

10. A camera device for determining a position of a mobile entity, the camera device being configured to acquire continuous image data of a surface for a computer-implemented method according to claim 1, the camera device comprising:
a. hull (48) defining a spherical cavity;
b. a spherical sensor (49) positioned within the spherical cavity and configured for free rotational movement therein;
c. a lens assembly (56) configured to direct light from the surface to the spherical sensor, the lens assembly comprising an object-side telecentric optical arrangement;
d. a coaxial illumination module (64) integrated with the lens assembly, configured to emit light along an optical axis of the lens assembly;
e. a magnetic suspension system (99) configured to suspend the spherical sensor within the spherical cavity; and
f. a magnetic actuation system configured to rotate the spherical sensor to compensate for motion of the camera device and maintain a stable field of view on the spherical sensor.

11. The camera device according to claim 9, wherein the spherical sensor (49) comprises a plurality of sparse sensor pixels (70) arranged with intervening gaps (71), and a condensing pixel lens (83) positioned over each sensor pixel (70).

12. The camera device according to claim 10, wherein the spherical sensor (49) further comprises an exterior lens (72) on an outer side of the spherical sensor and an interior lens (73) on an inner side of the spherical sensor, configured to direct light through the gaps (71).

13. The camera device according to any of claims 9 to 11, wherein the magnetic suspension system (99) comprises a plurality of rotor permanent magnets (103) integrated into the spherical sensor (49) and a plurality of stator permanent magnets (101) integrated into the hull (48), configured to generate a repulsive magnetic force between the spherical sensor and the hull.

14. The camera device according to any of claims 9 to 12, wherein the magnetic actuation system comprises a plurality of attraction coils (111) integrated into the hull (48), configured to generate a magnetic field that interacts with the rotor permanent magnets (103) to induce rotational movement of the spherical sensor (49).

15. The camera device according to any of claims 9 to 13, wherein the lens assembly (56) comprises a positive lens group (43) and a negative lens group (44) arranged to straighten light rays, and wherein the focus surface (128) of the lens assembly is spherical and aligned with an inner surface of the spherical sensor (49).

16. The camera device according to any of claims 9 to 14, wherein the coaxial illumination module (64) comprises a light source and a dichroic mirror (64) for injecting a light pencil beam aligned with the optical axis of the lens assembly.

17. The camera device according to any of claims 9 to 15, wherein the spherical sensor (49) is a transparent sensor (80) comprising stacked layers of sensing elements (74, 75, 76) for different light spectra.
